# EUROPEAN PATENT APPLICATION

(11) **EP 4 333 092 A1**
(43) Date of publication of application: **06.03.2024**
(21) Application number: 21938144.9
(22) Date of filing: 30.04.2021
(51) Int. Cl.: H01M 4/13, H01M 4/38, H01M 4/58, H01M 4/62, H01M 10/052, H01M 10/0562

(54) **POSITIVE ELECTRODE MATERIAL FOR ELECTRICAL DEVICE, AND POSITIVE ELECTRODE FOR ELECTRICAL DEVICE AND ELECTRICAL DEVICE USING SAME**

(71) Applicant: NISSAN MOTOR CO., LTD., Kanagawa 221-0023 (JP)
(72) Inventor: OOTANI, Issei, Atsugi-shi, Kanagawa 243-0123 (JP); OGIHARA, Wataru, Atsugi-shi, Kanagawa 243-0123 (JP); FUJIMOTO, Misaki, Atsugi-shi, Kanagawa 243-0123 (JP); ONO, Masaki, Atsugi-shi, Kanagawa 243-0123 (JP); ITO, Atsushi, Atsugi-shi, Kanagawa 243-0123 (JP); LI, Zhenguang, Atsugi-shi, Kanagawa 243-0123 (JP); MOROOKA, Masahiro, Atsugi-shi, Kanagawa 243-0123 (JP)
(74) Representative: Grünecker Patent- und Rechtsanwälte PartG mbB
(86) International application number: PCT/JP2021/017154
(87) International publication number: WO 2022/230163

(57) **Abstract**

To provide a means capable of improving capacity characteristics and charge-discharge rate characteristics in an electric device using a sulfur-containing positive electrode active material.

Among positive electrode materials for an electric device including a sulfur-containing positive electrode active material and a sulfur-containing solid electrolyte, a positive electrode material for an electric device showing a peak in a range of 1400 to 1450 cm⁻¹ in a Raman spectrum of microscopic Raman spectrometry using a laser with a wavelength of 532 nm is used.

## Description

### TECHNICAL FIELD

The present invention relates to a positive electrode material for an electric device, a positive electrode for an electric device and an electric device using the positive electrode material for an electric device.

### BACKGROUND ART

A known large-capacity negative electrode material to be used in an all-solid battery is metallic lithium, i.e., a negative electrode active material which supplies lithium ions to a positive electrode. However, in an all-solid battery which uses metallic lithium as a negative electrode active material and a sulfide solid electrolyte as a solid electrolyte, the metallic lithium reacts with the sulfide solid electrolyte, and thus the battery characteristics may be deteriorated.

Here, for the purpose of addressing such a problem, WO 2012/102037 proposes a technique in which a composite material containing a conductive agent and an alkali metal sulfide integrated with the surface of the conductive agent is used as a positive electrode material for an all-solid battery. According to WO 2012/102037, use of a positive electrode material having such a configuration makes it possible to provide a positive electrode material as well as a lithium-ion battery which have a high theoretical capacity and can use a negative electrode active material which does not supply lithium ions to the positive electrode.

### SUMMARY OF INVENTION

### Technical Problem

However, as described in Table 1 of WO 2012/102037, even when the above technique is adopted, it cannot be necessarily said that the discharge capacity to be taken out is sufficient, and there is a problem that a sulfur active material having large theoretical capacity cannot be fully utilized. Further, depending on the application of the secondary battery, it is insufficient that the capacity to be taken out is large, and it is also required that a sufficient capacity can be taken out during discharging and charging at a high charge-discharge rate (i.e., so-called charge-discharge rate capability is required to be sufficient). For example, a secondary battery having insufficient charge-discharge rate capability cannot utilize a sufficient capacity in response to rapid discharging and charging.

Therefore, an object of the present invention is to provide a means for enhancing capacity performance and charge-discharge rate capability of an electric device which uses a positive electrode active material containing sulfur.

### Solution to Problem

The present inventors have carried out a diligent study in order to solve the problem described above. As a result, it has been found that the problem described above can be solved by using a positive electrode material for an electric device showing a peak in a predetermined wave number region of a Raman spectrum among positive electrode materials for an electric device containing a sulfur-containing positive electrode active material and a sulfur-containing solid electrolyte, and the present invention has been completed.

### BRIEF DESCRIPTION OF DRAWINGS

Fig. 1 is a perspective view illustrating an appearance of a flat laminate type all-solid lithium secondary battery as one embodiment of the present invention.
Fig. 2 is a cross-sectional view taken along line 2-2 illustrated in Fig. 1.
Fig. 3A is a schematic cross-sectional view of a positive electrode material in the related art.
Fig. 3B is a schematic cross-sectional view of a positive electrode material according to one embodiment of the present invention.
Fig. 4A is a graph illustrating a Raman spectrum obtained by performing microscopic Raman spectrometry using a laser with a wavelength of 532 nm on powder particles of a positive electrode material for an electric device prepared in Example 1.
Fig. 4B is a graph illustrating a Raman spectrum obtained by performing microscopic Raman spectrometry using a laser with a wavelength of 532 nm on the powder particles of a positive electrode material for an electric device prepared in Comparative Example 1.
Fig. 5 is a graph illustrating a change in a charge capacity value when a charge treatment is performed while changing a charge rate on a positive electrode material obtained in Example 1 and Comparative Example 1.

### DESCRIPTION OF EMBODIMENTS

Hereinafter, the embodiments of the present invention described above will be described with reference to drawings. One aspect of the present invention is a positive electrode material for an electric device that contains a sulfur-containing positive electrode active material and a sulfur-containing solid electrolyte, and shows a peak in a range of 1400 to 1450 cm⁻¹ in a Raman spectrum of microscopic Raman spectrometry using a laser with a wavelength of 532 nm. With the positive electrode material for an electric device according to the present aspect, capacity characteristics and charge-discharge rate characteristics can be improved in an electric device using a sulfur-containing positive electrode active material.

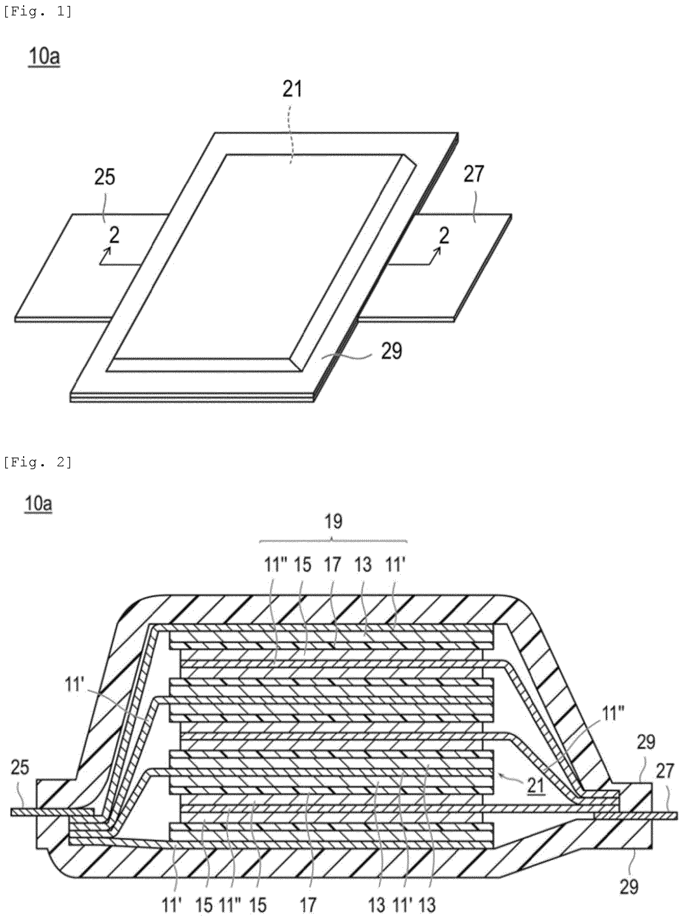

Fig. 1 is a perspective view illustrating an appearance of a flat laminate type all-solid lithium secondary battery as one embodiment of the present invention. Fig. 2 is a cross-sectional view taken along line 2-2 illustrated in Fig. 1. In the present specification, the embodiment will be described by taking, as an example, a case where a secondary battery is a flat laminate type (non-bipolar type) lithium-ion secondary battery illustrated in Figs. 1 and 2 (hereinafter also simply referred to as "laminate type battery").

As illustrated in Fig. 1, a laminate type battery 10a has a rectangular flat shape, and a negative electrode current collecting plate 25 and a positive electrode current collecting plate 27 for extracting electric power are extended from both sides of the battery. A power generating element 21 is wrapped in a battery outer casing material (laminate film 29) of the laminate type battery 10a, and the periphery of the battery outer casing material is heat-sealed, and the power generating element 21 is hermetically sealed in a state where the negative electrode current collecting plate 25 and the positive electrode current collecting plate 27 are extended to the outside.

As illustrated in Fig. 2, the laminate type battery 10a of the present embodiment has a structure in which the flat and substantially rectangular power-generating element 21 in which a charge and discharge reaction actually proceeds is sealed inside the laminate film 29 as the battery outer casing material. Here, the power-generating element 21 has a configuration in which a positive electrode, a solid electrolyte layer 17, and a negative electrode are laminated. The positive electrode has a structure in which a positive electrode active material layer 15 containing a positive electrode active material is disposed on both surfaces of a positive electrode current collector 11". The negative electrode has a structure in which a negative electrode active material layer 13 containing a negative electrode active material is disposed on both surfaces of a negative electrode current collector 11'. Thus, the positive electrode, solid electrolyte layer, and negative electrode that are adjacent constitute one single battery layer 19.

The negative electrode current collector 11' and the positive electrode current collector 11" have a structure in which a negative electrode current collecting plate (tab) 25 and a positive electrode current collecting plate (tab) 27 which are electrically connected to the respective electrodes (the positive electrode and the negative electrode) are respectively attached to the negative electrode current collector 11' and the positive electrode current collector 11" and are led to an outside of the laminate film 29 so as to be sandwiched between ends of the laminate film 29 as the outer casing material. Hereinafter, main constituent members of the lithium-ion secondary battery according to the present aspect is applied will be described.

### [Current Collector]

A current collector has a function of mediating transfer of electrons from electrode active material layers. Further, as long as a negative electrode active material layer and a positive electrode active material layer to be described later have conductivity by themselves and can have a current collecting function, a current collector as a member different from these electrode active material layers is not necessarily used.

### [Negative Electrode (Negative Electrode Active Material Layer)]

In a laminate type battery according to the embodiment illustrated in Figs. 1 and 2, a negative electrode active material layer 13 contains a negative electrode active material. The type of the negative electrode active material is not particularly limited, and the examples thereof include a carbon material, a metal oxide, and a metal active material. Furthermore, as the negative electrode active material, a metal containing lithium may be used. Such negative electrode active material is not particularly limited as long as the negative electrode active material is an active material containing lithium, and examples thereof include a lithium-containing alloy as well as metal lithium. Examples of the lithium-containing alloy include an alloy of Li and at least one of In, Al, Si, and Sn. The negative electrode active material preferably contains the metal lithium or the lithium-containing alloy, a silicon-based negative electrode active material, or a tin-based negative electrode active material, and particularly preferably contains the metal lithium or the lithium-containing alloy. Note that, in a case where the metal lithium or the lithium-containing alloy is used as the negative electrode active material, a lithium secondary battery as the electric device may be a so-called lithium-precipitation type lithium secondary battery in which lithium metal as the negative electrode active material is precipitated on a negative electrode current collector in a charge process. Therefore, in such an embodiment, a thickness of the negative electrode active material layer increases with progress of the charging process, and the thickness of the negative electrode active material layer decreases with progress of a discharge process. The negative electrode active material layer may not be present at the time of complete discharge, but in some cases, the negative electrode active material layer containing a certain amount of the lithium metal may be disposed at the time of complete discharge.

The content of the negative electrode active material in the negative electrode active material layer is not particularly limited, but for example, is preferably within a range of 40 to 99 mass%, and more preferably within a range of 50 to 90 mass%.

Preferably, the negative electrode active material layer further contains a solid electrolyte. When the negative electrode active material layer contains the solid electrolyte, the ion conductivity of the negative electrode active material layer can be improved. Examples of the solid electrolyte include a sulfide solid electrolyte and an oxide solid electrolyte, and a sulfide solid electrolyte is preferred.

Examples of the sulfide solid electrolyte include LiI-Li₂S-SiS₂, LiI-Li₂S-P₂O₅, LiI-Li₃PO₄-P₂S₅, Li₂S-P₂S₅, LiI-Li₃PS₄, LiI-LiBr-Li₃PS₄, Li₃PS₄, Li₂S-P₂S₅-LiI, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is any of Ge, Zn, and Ga), Li₂S-GeS₂, Li₂S-SiS₂-Li₃PO₄, Li₂S-SiS₂-LiₓMO_{y} (where x and y are positive numbers, and M is any of P, Si, Ge, B, Al, Ga, and In), and the like.

The sulfide solid electrolyte may have, for example, a Li₃PS₄ skeleton, a Li₄P₂S₇ skeleton, or a Li₄P₂S₆ skeleton. Examples of the sulfide solid electrolyte having a Li₃PS₄ skeleton include LiI-Li₃PS₄, LiI-LiBr-Li₃PS₄, and Li₃PS₄. Examples of the sulfide solid electrolyte having a Li₄P₂S₇ skeleton include a Li-P-S-based solid electrolyte called LPS (e.g., Li₇P₃S₁₁). As the sulfide solid electrolyte, for example, LGPS expressed by Li₍₄₋ₓ₎Ge₍₁₋ₓ₎PₓS₄ (x satisfies 0 < x < 1) or the like may be used. Above all, the sulfide solid electrolyte contained in the active material layer is preferably a sulfide solid electrolyte containing a P element, and the sulfide solid electrolyte is more preferably a material containing Li₂S-P₂S₅ as a main component. Furthermore, the sulfide solid electrolyte may contain halogen (F, Cl, Br, I). In one preferred embodiment, the sulfide solid electrolyte contains Li₆PS₅X (where X is Cl, Br, or I, preferably Cl).

Ion conductivity (e.g., Li ion conductivity) of the sulfide solid electrolyte at a normal temperature (25°C) is, for example, preferably 1 × 10⁻⁵ S/cm or more, and more preferably 1×10⁻⁴ S/cm or more. A value of the ion conductivity of the solid electrolyte can be measured by an AC impedance method.

Examples of the oxide solid electrolyte include a compound having a NASICON-type structure, and the like. Other examples of the oxide solid electrolyte include LiLaTiO (e.g., Li_{0.34}La_{0.51}TiO₃), LiPON (e.g., Li_{2.9}PO_{3.3}N_{0.46}), LiLaZrO (e.g., Li₇La₃Zr₂O₁₂), and the like.

The content of the solid electrolyte in the negative electrode active material layer is, for example, preferably within a range of 1 to 60 mass%, and more preferably within a range of 10 to 50 mass%.

The negative electrode active material layer may further contain at least one of a conductive aid and a binder in addition to the negative electrode active material and the solid electrolyte described above.

The thickness of the negative electrode active material layer varies depending on the configuration of the intended secondary battery, but is preferably, for example, within a range of 0.1 to 1000 µm.

### [Solid Electrolyte Layer]

In the laminate type battery according to the embodiment as shown in Figs. 1 and 2, the solid electrolyte layer is interposed between the positive electrode active material layer and negative electrode active material layer described above and essentially contains a solid electrolyte. A specific form of the solid electrolyte contained in the solid electrolyte layer is not particularly limited, and examples and preferred forms of the solid electrolyte described in the section of the negative electrode active material layer are adopted in the same manner. The solid electrolyte layer may further contain a binder in addition to the predetermined solid electrolyte described above.

The thickness of the solid electrolyte layer varies depending on the configuration of the intended lithium-ion secondary battery, but is preferably 600 um or less, more preferably 500 um or less, and still more preferably 400 um or less from the viewpoint that the volume energy density of the battery can be improved. Meanwhile, the lower limit of the thickness of the solid electrolyte layer is not particularly limited, but is preferably 1 um or more, more preferably 5 um or more, and still more preferably 10 um or more.

### [Positive Electrode Active Material Layer]

In the laminate type battery according to the embodiment illustrated in Figs. 1 and 2, a positive electrode active material layer contains a positive electrode material for an electric device according to one aspect of the present invention. The positive electrode material for an electric device essentially contains a sulfur-containing positive electrode active material and a sulfur-containing solid electrolyte, and preferably further contains a conductive material.

### (Positive Electrode Active Material Containing Sulfur)

The type of the sulfur-containing positive electrode active material is not particularly limited, but examples thereof include a particle or a thin film of an organic sulfur compound or an inorganic sulfur compound in addition to a sulfur simple substance (S) and lithium sulfide (Li₂S), and any material may be used as long as the material can release lithium ions during charge and occlude the lithium ions during discharge by utilizing an oxidation-reduction reaction of the sulfur. In particular, the inorganic sulfur compound is preferable for being excellent in stability, and specific examples thereof include the sulfur simple substance (S), TiS₂, TiS₂, TiS₄, NiS, NiS₂, CuS, FeS₂, Li₂S, MoS₂, MoS₃, MnS, MnS₂, CoS, CoS₂, or the like. Among the compounds, the S, an S-carbon composite, TiS₂, TiS₃, TiS₄, FeS₂, and MoS₂ are preferable, the sulfur simple substance (S) and the lithium sulfide (Li₂S), TiS₂, and FeS₂ are more preferable, and the sulfur simple substance (S) and the lithium sulfide (Li₂S) are particularly preferable from a viewpoint of high capacity.

The positive electrode material according to the present aspect may further contain a sulfur-free positive electrode active material, in addition to the positive electrode active material containing sulfur. Here, a ratio of a content of the positive electrode active material containing sulfur to a total amount of 100 mass% of the positive electrode active material is preferably 50 mass% or more, more preferably 70 mass% or more, still more preferably 80 mass% or more, yet still more preferably 90 mass% or more, particularly preferably 95 mass% or more, and most preferably 100 mass .

### (Sulfur-Containing Solid Electrolyte)

The positive electrode material according to the present aspect essentially contains a sulfur-containing solid electrolyte. A specific form of the sulfur-containing solid electrolyte contained in the positive electrode material according to the present aspect is not particularly limited, and the sulfur-containing solid electrolyte exemplified in the section of the negative electrode active material layer and a preferred form thereof can be similarly employed.

Among the forms, the solid electrolyte contained in the positive electrode material according to the present aspect is preferably a sulfide solid electrolyte. In another preferred embodiment, the sulfur-containing solid electrolyte contained in a solid electrolyte layer contains an alkali metal atom. Here, examples of the alkali metal atom that can be contained in the sulfur-containing solid electrolyte include a lithium atom, a sodium atom, or a potassium atom, and among the atoms, the lithium atom is preferable from the viewpoint of excellent ionic conductivity. In still another preferred embodiment, the solid electrolyte contained in the solid electrolyte layer contains an alkali metal atom (for example, lithium atom, sodium atom or potassium atom; preferably lithium atom) as well as a phosphorus atom and/or a boron atom. In one preferred embodiment, the sulfide solid electrolyte includes Li₆PS₅X (wherein X is Cl, Br or I, and preferably Cl). These solid electrolytes can also effectively contribute to expression of the effect of the present invention for having a high ionic conductivity.

### (Conductive Material)

The positive electrode material according to the present aspect preferably further contains a conductive material. The specific form of the conductive material contained in the positive electrode material according to the present aspect is not particularly limited, and conventionally known materials can be appropriately adopted. Among the forms, in a case where the positive electrode material according to the present aspect contains a conductive material, the conductive material more preferably has pores. By using the conductive material having pores, there is an advantage that the positive electrode active material and the solid electrolyte can be filled in inner portions of the pores, and a three-phase interface containing these three materials is formed and the positive electrode reaction is more likely to proceed. Furthermore, the conductive material having pores is preferably a carbon material from the viewpoint of excellent conductivity, ease of processing, and ease of designing a desired pore distribution.

Examples of the carbon material having pores include carbon black, such as activated carbon, ketjen black (registered trademark) (highly conductive carbon black), (oil) furnace black, channel black, acetylene black, thermal black, and lamp black; and carbon particles (carbon carriers) made of coke, natural graphite, artificial graphite, and the like. The main component of the carbon material is preferably carbon. Here, the phrase "the main component is carbon" means that carbon atoms are contained as a main component, and includes the concept of consisting only of carbon atoms and the concept of consisting substantially of carbon atoms. The phrase "consisting substantially of carbon atoms" means that the mixing of approximately 2 to 3 mass% or less of impurities may be allowable.

The BET specific surface area of the conductive material having pores (preferably, a carbon material) is preferably 200 m²/g or more, more preferably 500 m²/g or more, still more preferably 800 m²/g or more, particularly preferably 1200 m²/g or more, and most preferably 1500 m²/g or more. Further, the pore volume of the conductive material is preferably 1.0 mL/g or more, more preferably 1.3 mL/g or more, and still more preferably 1.5 mL/g or more. When the BET specific surface area and pore volume of the conductive material are values within such ranges, a sufficient number of pores can be held, and thus a sufficient amount of the positive electrode active material can be held. The BET specific surface area and pore volume of the conductive material can be measured based on adsorption and desorption of nitrogen. The measurement based on adsorption and desorption of nitrogen at a temperature of -196°C is performed using BELSORP mini, manufactured by MicrotracBEL Corp., and analysis is conducted by a multipoint method. The BET specific surface area is determined from the adsorption isotherm in a relative pressure range of 0.01 < P/P₀ < 0.05. Further, the pore volume is determined from the volume of the adsorbed N₂ at a relative pressure of 0.96.

An average pore size of the conductive material is not particularly limited, but is preferably 50 nm or less, and particularly preferably 30 nm or less. When the average pore size is a value within these ranges, electrons can be sufficiently supplied to the active material present at a position away from the pore wall, among the positive electrode active materials containing sulfur placed in the pores. Note that the average pore size of the conductive material can be calculated by the measurement based on adsorption and desorption of nitrogen, in the same manner as above.

An average particle diameter (primary particle diameter) in a case where the conductive material is in particle form is not particularly limited, but is preferably in a range of 0.05 to 50 um, more preferably in a range of 0.1 to 20 µm, and still more preferably in a range of 0.5 to 10 um. Note that, in the present description, "a particle diameter of the conductive material" means a maximum distance L among distances between any two points on a contour line of the conductive material. As a value of "an average particle diameter of the conductive material", a value is adopted that is calculated as an average value of particle diameters of particles observed in several to several tens of fields of view by using an observation means such as a scanning electron microscope (SEM), a transmission electron microscope (TEM), or the like.

As described above, the positive electrode material according to the present aspect contains a sulfur-containing positive electrode active material and a sulfur-containing solid electrolyte, but in a case where the positive electrode material further includes a conductive material having pores, it is preferable that at least a part of the solid electrolyte and at least a part of the positive electrode active material are disposed on inner surfaces of the pores of the conductive material described above to be in contact with each other. Hereinafter, one preferred embodiment of such form will be described with reference to the drawings.

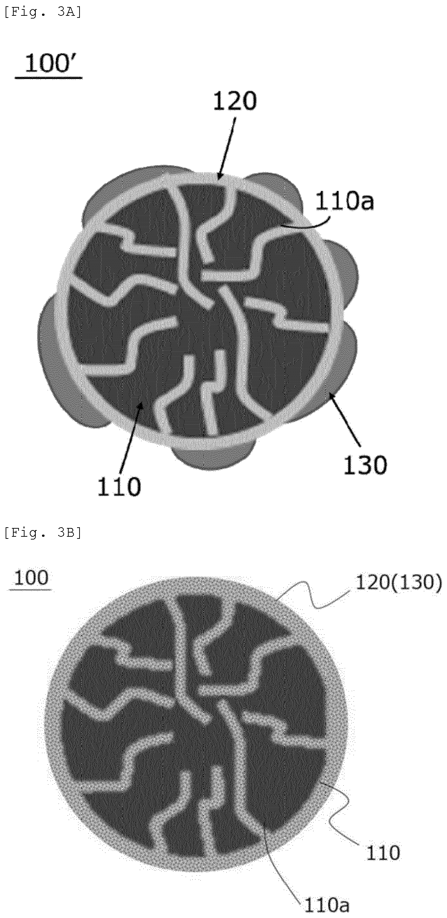

Fig. 3A is a schematic cross-sectional view of a positive electrode material 100' in the related art. Further, Fig. 3B is a schematic cross-sectional view of a positive electrode material 100 according to one embodiment of the present invention. In Figs. 3A and 3B, a carbon material (e.g., activated carbon) 110, which is a conductive material, has a large number of pores 110a. Sulfur 120, which is a positive electrode active material, is filled and placed in the pores 110a. The positive electrode active material (sulfur) 120 is also placed on the surface of the carbon material (activated carbon) 110. Here, in the positive electrode material 100' in the related art shown in Fig. 3A, a solid electrolyte 130 is placed only on the surface of the carbon material (activated carbon) 110. On the contrary, in a positive electrode material 100 according to one embodiment of the present invention illustrated in Fig. 3B, a solid electrolyte 130 is present in a highly dispersed state in a positive electrode active material (sulfur) 120 disposed on the surface of the carbon material (an activated carbon) 110 and the inner surfaces of the pores of the carbon material (the activated carbon) 110. More specifically, a continuous phase containing the positive electrode active material (sulfur) 120 is filled in the inner portions of pores 110a and is also present on the surface of the carbon material (the activated carbon) 110, and the solid electrolyte 130 is disposed as a dispersed phase in the continuous phase. Accordingly, at least a part of the solid electrolyte disposed on the surface of the conductive material (the activated carbon) and at least a part of the positive electrode active material (sulfur) similarly disposed on the surface of the conductive material (the activated carbon) are in contact with each other. With such configuration, it is possible to form particularly many reaction points (three-phase interfaces), and it is possible to effectively contribute to improvement in performance of the electric device. Here, whether or not the positive electrode active material or the solid electrolyte is disposed in the inner portions of the pores of the conductive material can be confirmed by using various conventionally known methods. For example, mapping of elements derived from each material is performed on an observed image of a cross section of the conductive material contained in the positive electrode material with the transmission electron microscope (TEM) by using energy dispersive X-ray spectroscopy (EDX), and an arrangement form of each material can be confirmed by using an element map obtained and a count number of the elements derived from each material with respect to the count number of all elements as an index. For example, in the positive electrode material according to the present aspect, when the sulfur-containing solid electrolyte essentially contains a phosphorus atom and there is no possibility that the phosphorus atom is derived from other materials, it is possible to acquire the element map described above for phosphorus and confirm the arrangement form of the solid electrolyte from the distribution. Furthermore, it is also possible to confirm the arrangement form of the solid electrolyte from a value of a ratio of the count number of the phosphorus to the count number of all the elements in the EDX. In the case of confirming the arrangement form of the solid electrolyte using, as an index, the count number of elements derived only from the solid electrolyte in EDX, when the ratio of the count number of elements derived only from the solid electrolyte to the count number of all elements in EDX is 0.10 or more, it can be determined that the solid electrolyte is placed in the pores of the conductive material. Further, the ratio is preferably 0.15 or more, more preferably 0.20 or more, still more preferably 0.26 or more, and particularly preferably 0.35 or more. A large value of the ratio indicates that a large amount of the solid electrolyte is placed on the inner surface of the pores of the conductive material. Accordingly, when the ratio is a value within these ranges, the action and effect of the present invention can be more remarkably exhibited. A preferable upper limit of the ratio is not particularly limited, but the preferable upper limit is, for example, 0.50 or less, and more preferably 0.45 or less.

The positive electrode material for an electric device according to the present aspect is characterized in that a peak is shown in a range of 1400 to 1450 cm⁻¹ in the Raman spectrum of the microscopic Raman spectrometry using the laser with the wavelength of 532 nm for the powder particles of the positive electrode material.

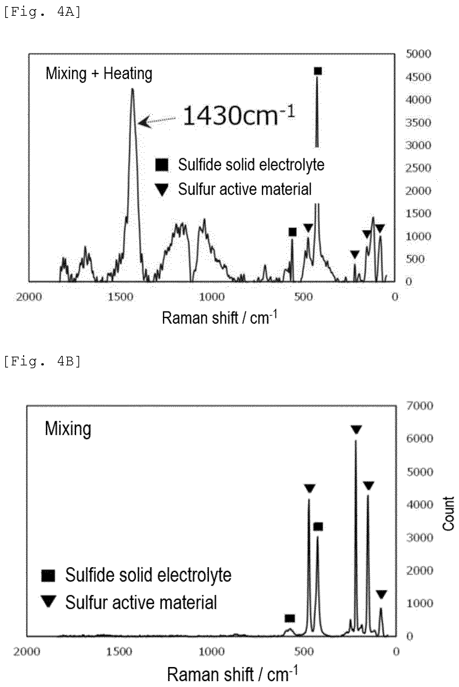

Here, Fig. 4A is a graph illustrating a Raman spectrum obtained by performing microscopic Raman spectrometry using a laser with the wavelength of 532 nm on the powder particles of the positive electrode material for an electric device prepared in Example 1 to be described later. As illustrated in Fig. 4A, the Raman spectrum of the positive electrode material for an electric device according to the present aspect first shows a peak considered to be derived from each of a sulfur active material and the sulfide solid electrolyte in a region of 600 cm⁻¹ or less. Furthermore, the Raman spectrum of the positive electrode material for an electric device according to the present aspect is characterized in that a peak is also observed near 1430 cm⁻¹ in addition to the peak described above.

Then, according to the study of the present inventors, it has been determined that when the electric device such as an all-solid-state lithium secondary battery or the like is configured by using a positive electrode material that contains a sulfur-containing positive electrode active material and a sulfur-containing solid electrolyte, and shows the peak in the range of 1400 to 1450 cm⁻¹ in a Raman spectrum of the microscopic Raman spectroscopy using the laser with the wavelength of 532 nm, the capacity characteristics and the charge-discharge rate characteristics can be significantly improved. Although such mechanism is not completely clear, the mechanism below is presumed. That is, the positive electrode material having the peak determined above according to the present aspect can be produced, for example, by mixing the sulfur-containing positive electrode active material and the sulfur-containing solid electrolyte to obtain a mixture, and then heating the mixture at a relatively high temperature (185°C in Example 1) as described later. On the other hand, in Comparative Example 1 in which such heating treatment is not performed, the peak in the range of 1400 to 1450 cm⁻¹ is not observed as illustrated in Fig. 4B. For such reason, it is considered that an intermediate layer containing components excellent in ion conductivity to some extent is formed at an interface where the sulfur-containing positive electrode active material and the sulfur-containing solid electrolyte are in contact with each other during the heating treatment at the relatively high temperature described above. Although the substance of the component is also unknown, for example, it is considered that a sulfur (S)-rich ion conductive layer (Li₆PS₅₊ₙCl, Li₃PS₄₊ₙ, or the like) may be formed at a contact interface between the sulfur simple substance (S) and a phosphorus-containing sulfide solid electrolyte, and it is presumed that the peak in the range of 1400 to 1450 cm⁻¹ described above is observed as a Raman band corresponding to double bond of the compounds. Certainly, since it is considered that composition of the compound generated at the contact interface also changes as the type of the active material or the solid electrolyte changes, it is not essential to generate a compound having the composition described above. As a result of the intermediate layer excellent in ion conductivity being interposed between the positive electrode active material and the solid electrolyte as described above, it is considered that the charge-discharge reaction can be sufficiently performed even when a charge-discharge cycle proceeds, and the capacity characteristics and cycle durability are significantly improved.

One example of a method for producing the positive electrode material having the configuration described above according to the present aspect will be described. As described above, it is presumed that the positive electrode material according to the present aspect contributes to excellent capacity characteristics and charge-discharge rate characteristics due to presence of an ion conductive compound present at the contact interface between the sulfur-containing positive electrode active material and the sulfur-containing solid electrolyte. Then, it is considered that the ion conductive compound is generated by the heating treatment at the relatively high temperature. Therefore, it is considered that the positive electrode material according to the present aspect is obtained by heat-treating the mixture of the sulfur-containing positive electrode active material and the sulfur-containing solid electrolyte at a high temperature. At this time, the temperature of the heating treatment is not particularly limited, but is preferably higher than 170°C, more preferably 175°C or higher, still more preferably 180°C or higher, and particularly preferably 185°C or higher. On the other hand, an upper limit value of the temperature of the heating treatment is also not particularly limited, but is, for example, 250°C or lower, and preferably 200°C or lower. Furthermore, heating treatment time is not particularly limited, and may be about 1 to 5 hours. When the heating treatment is performed, the sulfur-containing positive electrode active material and the sulfur-containing solid electrolyte may be present in a mixture state, but the mixture preferably further contains a conductive material. In a case where the mixture contains the conductive material having pores, the sulfur-containing positive electrode active material and the sulfur-containing solid electrolyte are filled up to the inner portions of the pores of the conductive material by the heating treatment described above, and a positive electrode material having a preferred form in which a large number of the three-phase interfaces are formed can be obtained. At this time, the means for obtaining a mixture containing the three components described above is also not particularly limited, and examples thereof include mixing treatment using a mixing means such as a mortar or the like, milling treatment using a grinding means such as a planetary ball mill or the like, etc. Among the treatment, from the viewpoint of obtaining a larger initial capacity and more excellent charge-discharge rate characteristics, it is preferable to subject a mixture obtained by the milling treatment to the heating treatment described above. On the other hand, instead of the mixture of the three components described above, the mixture of the sulfur-containing positive electrode active material and the sulfur-containing solid electrolyte may be first obtained by the mixing treatment or the milling treatment, and then the mixture may be subjected to the heating treatment described above. Subsequently, by additionally adding the conductive material, and performing mix treatment such as the mixing treatment, the milling treatment, or the like, the positive electrode material according to one aspect of the present invention containing the three components described above can also be obtained.

As still another production method, a method may be employed in which a mixture of the conductive material and the sulfur-containing solid electrolyte is obtained by the mixing treatment or the milling treatment, and then the heating treatment described above is performed in a state where the sulfur-containing positive electrode active material is additionally added to the mixture. According to such a method, the positive electrode active material and the solid electrolyte enter into the inner portions of the pores of the conductive material having the pores by the heating treatment, and the positive electrode material in the preferred form in which the large number of the three-phase interfaces are formed is obtained. Note that, the mixture of the conductive material having pores and the sulfur-containing positive electrode active material may be prepared by a wet method instead of a dry method as described above. For example, a solution in which the solid electrolyte is dissolved in an appropriate solvent capable of dissolving the solid electrolyte is first prepared, impregnated with the conductive material having pores, and heated to a temperature of about 100 to 180°C for about 1 to 5 hours as necessary, and therefore, a solid electrolyte/conductive material composite can be obtained. In the composite, the solid electrolyte usually enters into and adheres to the inner portions of the pores of the conductive material. Next, by subjecting the composite to the heating treatment described above in the state where the sulfur-containing positive electrode active material is additionally added, the positive electrode active material is melted to allow the positive electrode active material to enter into the inner portions of the pores of the conductive material, and the positive electrode material in the preferred form in which the large number of the three-phase interfaces are formed can be obtained. According to the production method in which the wet method is adopted, a positive electrode material particularly excellent in initial capacity characteristics and charge-discharge rate characteristics can be obtained.

The content of the positive electrode active material in the positive electrode active material layer is not particularly limited, but for example, is preferably within a range of 35 to 99 mass%, and more preferably within a range of 40 to 90 mass%. The value of the content is calculated based on the mass of only the positive electrode active material excluding the conductive material and the solid electrolyte.

Furthermore, the positive electrode active material layer may further contain a conductive aid (in which the positive electrode active material and the solid electrolyte are not held inside the pores) and/or a binder. Similarly, the positive electrode active material layer preferably further contains a solid electrolyte separately from the positive electrode material described above.

One embodiment of the lithium secondary battery to which the positive electrode material according to the present aspect is applicable has been described above. Further, the present invention is not limited to only the configuration described in the embodiments described above, and can be appropriately changed based on descriptions of the claims. For example, as a type of a battery to which the lithium secondary battery is applied, a bipolar battery is also exemplified. Furthermore, the solid electrolyte layer of the lithium secondary battery may further contain a conventionally known liquid electrolyte (an electrolyte solution). An amount of the liquid electrolyte (the electrolyte solution) at this time is preferably such an amount that a shape of the solid electrolyte layer formed by the solid electrolyte is maintained and liquid leakage of the liquid electrolyte (the electrolyte solution) does not occur.

### Examples

Hereinbelow, the present invention will be described in more detail with reference to Examples. However, the technical scope of the present invention is not limited to the following Examples.

### <<Preparation Example of Test Cell>>

### [Example 1]

### (Preparation of Sulfur-Containing Positive Electrode Material)

In a glove box under an argon atmosphere having a dew point of - 68°C or lower, sulfur (manufactured by Sigma-Aldrich Co., LLC), a sulfide solid electrolyte (Li₆PS₅Cl manufactured by Ampcera Inc.), and carbon (activated carbon MSC-30 manufactured by Kansai Coke & Chemicals Co., Ltd.) were respectively weighed. At this time, respective components were weighed to make a mass ratio of the sulfur : the sulfide solid electrolyte : the carbon = 50 : 40 : 10. Next, the respective components weighed above were sufficiently mixed in an agate mortar, and then mixed powder was placed in a sealed pressure-resistant autoclave vessel and heated at 185°C for 3 hours. Accordingly, the sulfur was melted, the carbon was impregnated with the sulfur, and powder of the sulfur-containing positive electrode material was obtained.

### (Microscopic Raman Spectrometry of Sulfur-Containing Positive Electrode Material)

The microscopic Raman spectrometry is performed on the powder particles of the sulfur-containing positive electrode material to obtain a Raman spectrum. Here, HR manufactured by HORIBA, Ltd. was used as a Raman analyzer. As measurement conditions, an objective lens of 100 times was used, a laser having a wavelength of 532 nm was used as incident light, and a slit width was set to 0.1 mm. A measurement range was set to 0 to 2000 cm⁻¹, measurement time was set to 10 seconds, and a number of times of integrations was set to 24. The Raman spectrum thus obtained is illustrated in Fig. 4A. As illustrated in Fig. 4A, the Raman spectrum of the sulfur-containing positive electrode material obtained in the present Example first shows a peak considered to be derived from each of the sulfur active material and the sulfide solid electrolyte in a region of 600 cm⁻¹ or less. Furthermore, in the Raman spectrum of the sulfur-containing positive electrode material obtained in the present Example, a peak was also observed near 1430 cm⁻¹ in addition to the peak described above.

### (Preparation of Test Cell (All-Solid Lithium Secondary Battery))

A battery was produced in a glove box in an argon atmosphere with a dew point of -68°C or lower. A cylindrical recessed punch (10 mm diameter) made of SUS was inserted into one side of a cylindrical tube jig (tube inner diameter: 10 mm, outer diameter: 23 mm, height: 20 mm) made of Macor, and 80 mg of sulfide solid electrolyte (Li₆PS₅Cl, manufactured by Ampcera Inc.) was inserted from the upper side of the cylindrical tube jig. Thereafter, another cylindrical recessed punch made of SUS was inserted into the jig to sandwich the solid electrolyte. The solid electrolyte was pressed using an oil hydraulic press at a pressure of 75 MPa for 3 minutes to form a solid electrolyte layer having a diameter of 10 mm and a thickness of about 0.6 mm in the cylindrical tube jig. Next, the cylindrical recessed punch inserted from the upper side was once removed, 7.5 mg of the sulfur-containing positive electrode material prepared above was added to one side surface of the solid electrolyte layer in the cylindrical tube. The cylindrical recessed punch (also serving as a positive electrode current collector) was inserted again from the upper side and pressed at a pressure of 300 MPa for 3 minutes to form a positive electrode active material layer having a diameter of 10 mm and a thickness of about 0.06 mm on one side surface of the solid electrolyte layer. Then, the lower side of the cylindrical recessed punch (also serving as a negative electrode current collector) was removed. Negative electrodes: a lithium foil (manufactured by The Nilaco Corporation, thickness: 0.20 mm) punched to a diameter of 8 mm and an indium foil (manufactured by The Nilaco Corporation, thickness: 0.30 mm) punched to a diameter of 9 mm were overlapped. The overlapped foil was put in from the lower side of the cylindrical tube jig such that the indium foil was located on the solid electrolyte layer side. Then, the cylindrical recessed punch was inserted again, and pressed at a pressure of 75 MPa for 3 minutes to form a lithium-indium negative electrode. As described above, a test cell (all-solid lithium secondary battery) including a negative electrode current collector (punch), a lithium-indium negative electrode, a solid electrolyte layer, a positive electrode active material layer, and a positive electrode current collector (punch) laminated in this order was produced.

### [Example 2]

A test cell was produced by the same method as in Example 1 described above except that mixing using the planetary ball mill was adopted instead of the mixing using the agate mortar as a method of mixing the respective components of the positive electrode material. Note that, the respective components were mixed by being placed in a zirconia container having a volume of 45 mL and treated with the planetary ball mill (a premium line P-7 manufactured by Fritsch Japan Co., Ltd.) at 370 rpm for 6 hours. Furthermore, for the sulfur-containing positive electrode material prepared in the present Example, the Raman spectrum was acquired by performing the microscopic Raman spectrometry in the same manner as described above. As a result, similarly to Example 1 (Fig. 4A), a peak was observed in the region of 1400 to 1450 cm⁻¹.

### [Example 3]

In the glove box under the argon atmosphere having the dew point of -68°C or lower, a predetermined amount of the sulfur (manufactured by Sigma-Aldrich Co., LLC) and a predetermined amount of the sulfide solid electrolyte (Li₆PS₅Cl manufactured by Ampcera Inc.) were respectively weighed. Next, the respective components weighed above were sufficiently mixed in an agate mortar, and then mixed powder was placed in a sealed pressure-resistant autoclave vessel and heated at 185°C for 3 hours. Accordingly, the sulfur was melted to obtain a sulfur active material/sulfide solid electrolyte composite. Subsequently, a predetermined amount of the carbon (the activated carbon MSC-30 manufactured by Kansai Coke & Chemicals Co., Ltd.) was further weighed, and sufficiently mixed with the sulfur active material/sulfide solid electrolyte composite obtained above in the agate mortar to obtain the powder of the sulfur-containing positive electrode material. Note that, the respective components were weighed to make the mass ratio of the sulfur : the sulfide solid electrolyte : the carbon = 50 : 40 : 10. The test cell was produced by the same method as in Example 1 described above except that the sulfur-containing positive electrode material thus obtained was used. Note that, for the sulfur-containing positive electrode material prepared in the present Example, the Raman spectrum was acquired by performing the microscopic Raman spectrometry in the same manner as described above. As a result, similarly to Example 1 (Fig. 4A), a peak was observed in the region of 1400 to 1450 cm⁻¹.

### [Example 4]

First, in the glove box under the argon atmosphere having the dew point of -68°C or lower, 2.00 g of the sulfide solid electrolyte (Li₆PS₅Cl manufactured by Ampcera Inc.) was added to 100 ml of super dehydrated ethanol (manufactured by FUJIFILM Wako Pure Chemical Corporation), and stirred to dissolve the solid electrolyte in the ethanol until a solution became transparent. 1.00 g of the carbon (the activated carbon MSC-30 manufactured by Kansai Coke & Chemicals Co., Ltd.) was added to the solid electrolyte ethanol solution obtained, and well stirred to sufficiently disperse the carbon in the solution. A container containing the solution with the carbon dispersed was connected to a vacuum apparatus, and the container was brought into a depressurized state inside to 1 Pa or less by an oil rotary pump while the solution with the carbon dispersed in the container was stirred with a magnetic stirrer. Since the ethanol as the solvent was volatilized under reduced pressure, the ethanol was removed with a lapse of time, and the carbon impregnated with the solid electrolyte remained in the container. In this way, the ethanol was removed under the reduced pressure, then the heating treatment was performed to 150°C under the reduced pressure, and heat-treated for 3 hours to obtain a sulfide solid electrolyte/carbon composite. Next, a predetermined amount of sulfur (manufactured by Sigma-Aldrich Co., LLC) was weighed, and sufficiently mixed with the sulfide solid electrolyte/carbon composite obtained above in the agate mortar. Subsequently, the mixed powder was placed in the sealed pressure-resistant autoclave container and heated at 185°C for 3 hours. Accordingly, the sulfur was melted, the carbon was impregnated with the sulfur to obtain a sulfur active material/sulfide solid electrolyte/carbon composite. Next, the sulfur active material/sulfide solid electrolyte/carbon composite and further a predetermined amount of the sulfide solid electrolyte separately weighed were placed in the zirconia container having a capacity of 45 mL, and treated with the planetary ball mill (premium line P-7 manufactured by Fritsch Japan Co., Ltd.) at 370 rpm for 6 hours to obtain the powder of the sulfur-containing positive electrode material. Note that, the respective components were weighed to make a mass ratio of the sulfur : (the sulfide solid electrolyte/the sulfide solid electrolyte in the carbon composite) : balance sulfide solid electrolyte : the carbon = 50 : 20 : 20 : 10. The test cell was produced by the same method as in Example 1 described above except that the sulfur-containing positive electrode material thus obtained was used. Note that, for the sulfur-containing positive electrode material prepared in the present Example, the Raman spectrum was acquired by performing the microscopic Raman spectrometry in the same manner as described above. As a result, similarly to Example 1 (Fig. 4A), a peak was observed in the region of 1400 to 1450 cm⁻¹.

### [Comparative Example 1]

The test cell was produced by the same method as in Example 1 described above except that the heating treatment was not performed at 185°C for 3 hours in the sealed pressure-resistant autoclave container in the preparation of the sulfur-containing positive electrode material. Note that, for the sulfur-containing positive electrode material prepared in the present Comparative Example, the Raman spectrum was acquired by performing the microscopic Raman spectrometry in the same manner as described above. The Raman spectrum thus obtained is illustrated in Fig. 4B. As illustrated in Fig. 4B, the Raman spectrum of the sulfur-containing positive electrode material obtained in the present Comparative Example first showed a peak considered to be derived from each of the sulfur active material and the sulfide solid electrolyte in the region of 600 cm⁻¹ or less similarly to Fig. 4A. On the other hand, in the Raman spectrum of the sulfur-containing positive electrode material obtained in the present Comparative Example, no conspicuous peak was observed other than the peak described above, and particularly, no peak was observed in the region of 1400 to 1450 cm⁻¹ as illustrated in Fig. 4A either.

### [Comparative Example 2]

The test cell was produced by the same method as in Example 2 described above except that the heating treatment was not performed at 185°C for 3 hours in the sealed pressure-resistant autoclave container in the preparation of the sulfur-containing positive electrode material. Note that, for the sulfur-containing positive electrode material prepared in the present Comparative Example, the Raman spectrum was acquired by performing the microscopic Raman spectrometry in the same manner as described above. As a result, as illustrated in Fig. 4B, several peaks were observed in the region of 600 cm⁻¹, but no peak was observed in the region of 1400 to 1450 cm⁻¹.

### <Evaluation Example of Test Cell>

The capacity performance and charge-discharge rate capability of each of the test cells produced in the Comparative Examples and Examples described above were evaluated by the methods below. All the following measurements were performed in a constant temperature thermostat bath set at 25°C using a charge-discharge test device (HJ-SD8, manufactured by

### HOKUTO DENKO CORPORATION).

### (Evaluation of Capacity Characteristics and Charge Rate Characteristics)

The test cell was placed in a thermostatic bath, and after a cell temperature became constant, discharge was performed up to a cell voltage of 0.5 V at a current density of 0.2 mA/cm², and then constant current constant voltage charge at 2.5 V was performed at the same current density by setting a cutoff current to 0.01 mA/cm² as cell conditioning. Then, such conditioning charge-discharge cycle was repeated for 10 times. Next, after full discharge was performed by 0.05 C discharge at a cutoff voltage of 0.5 V, constant current charge at 0.05 C was performed at a cutoff voltage of 2.5 V, and a charge capacity value in the charge at 0.05 C was measured. Similarly, constant current charge at 0.2 C was separately performed at a cutoff voltage of 2.5 V, and a charge capacity value in the charge at 0.2 C was also measured. Then, a percentage (a charge capacity retention rate) of the charge capacity value obtained by the constant current charge at 0.2 C to the charge capacity value obtained by the constant current charge at 0.05 C was calculated. Results are shown in Table 1 below together with a value of the charge capacity value at each rate.

**[Table 1]**

| | Positive electrode material preparation process | | | | | | | | Raman band @1400-1450 cm⁻¹ | 0.05 C Charge capacity [mAh/g-S] | 0.2 C Charge capacity [mAh/g-S] | Charge capacity retention rate (0.2 C/0.05 C) [%] |
|---|---|---|---|---|---|---|---|---|---|---|---|---|
| | Pre-treatment (1) | | Pre-treatment (2) | | Positive electrode material preparation treatment | | Post-treatment | | | | | |
| | Target | Process | Target | Process | Target | Process | Target | Process | | | | |
| Example 1 | - | - | - | - | C + SE + S | Mixing | C/SE/S | Heating treatment @185°C | Presence | 1420 | 905 | 63.8 |
| Example 2 | - | - | - | - | C + SE + S | Planetary ball mill | C/SE/S | Heating treatment @185°C | Presence | 1606 | 1289 | 80.3 |
| Example 3 | SE+S | Mixing | SE/S | Heating treatment @185°C | SE/S + C | Mixing | - | - | Presence | 1535 | 1093 | 71.2 |
| Example 4 | C + SE | SE liquid phase impregnation @150°C | C/SE + S | S heat impregnation @185°C | C/SE/S + SE | Planetary ball mill | - | - | Presence | 1703 | 1369 | 80.4 |
| Comparative Example 1 | - | - | - | - | C + SE + S | Mixing | - | - | Absence | 1253 | 396 | 31.6 |
| Comparative Example 2 | - | - | - | - | C + SE + S | Planetary ball mill | - | - | Absence | 1387 | 555 | 40.0 |

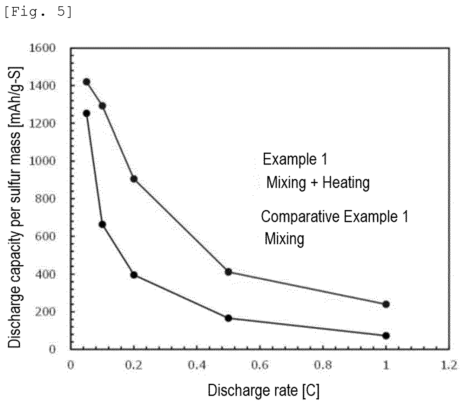

Furthermore, for the positive electrode materials obtained in Example 1 and Comparative Example 1, the results of the charge capacity values that were measured at charge rates of 0.1 C, 0.5 C and 1.0 C in the same manner as described above are further illustrated in Fig. 5 together with the results shown in Table 1. From the results shown in Table 1 and Fig. 5, it can be seen that according to the present invention, improvement in the capacity characteristics and the charge-discharge rate characteristics can be achieved in the all-solid-state lithium secondary battery using the sulfur-containing positive electrode active material.

### Reference Signs List

- 10a: Laminate type battery
- 11': Negative electrode current collector
- 11": Positive electrode current collector
- 13: Negative electrode active material layer
- 15: Positive electrode active material layer
- 17: Solid electrolyte layer
- 19: Single battery layer
- 21: Power-generating element
- 25: Negative electrode current collecting plate
- 27: Positive electrode current collecting plate
- 29: Laminate film
- 100, 100': Positive electrode material
- 110: Carbon material (activated carbon)
- 110a: Pore
- 120: Positive electrode active material (sulfur)
- 130: Solid electrolyte

## Claims

1. A positive electrode material for an electric device, the positive electrode material comprising: a sulfur-containing positive electrode active material and a sulfur-containing solid electrolyte, wherein
the positive electrode material for an electric device shows a peak in a range of 1400 to 1450 cm⁻¹ in a Raman spectrum of microscopic Raman spectrometry using a laser with a wavelength of 532 nm.

2. The positive electrode material for an electric device according to claim 1, wherein the positive electrode active material is a sulfur simple substance or lithium sulfide.

3. The positive electrode material for an electric device according to claim 1 or 2, wherein the solid electrolyte is a sulfide solid electrolyte containing an alkali metal atom as well as a phosphorus atom and/or a boron atom.

4. The positive electrode material for an electric device according to claim 3, wherein the alkali metal is lithium.

5. The positive electrode material for an electric device according to any one of claims 1 to 4, further comprising a conductive material.

6. The positive electrode material for an electric device according to claim 5, wherein the conductive material has pores.

7. The positive electrode material for an electric device according to claim 6, wherein a pore volume of the conductive material is 1.0 mL/g or more.

8. The positive electrode material for an electric device according to any one of claims 5 to 7, wherein an average pore diameter of the conductive material is 50 nm or less.

9. The positive electrode material for an electric device according to any one of claims 5 to 8, wherein the conductive material is a carbon material.

10. The positive electrode material for an electric device according to any one of claims 1 to 9, wherein a value of a ratio of a count number of an element derived only from the solid electrolyte to a count number of all elements is 0.10 or more in an observed image of a cross section of the conductive material contained in the positive electrode material by TEM-EDX.

11. The positive electrode material for an electric device according to any one of claims 6 to 10, wherein at least a part of the solid electrolyte and at least a part of the positive electrode active material are disposed on inner surfaces of the pores to be in contact with each other.

12. The positive electrode material for an electric device according to claim 11, wherein a continuous phase containing the positive electrode active material is filled in inner portions of the pores, and the solid electrolyte is disposed as a dispersed phase in the continuous phase.

13. A positive electrode for an electric device, the positive electrode comprising the positive electrode material for an electric device according to any one of claims 1 to 12.

14. An electric device comprising the positive electrode for an electric device according to claim 13.

15. The electric device according to claim 14, wherein the electric device is an all-solid-state lithium secondary battery.
